# EUROPEAN PATENT SPECIFICATION

(11) **EP 0 516 151 B1**
(45) Date of publication and mention of the grant of the patent: **21.01.1998**
(21) Application number: 92109101.3
(22) Date of filing: 29.05.1992
(51) Int. Cl.: B29C 45/16, A47G 25/14, A47G 25/26

(54) **Coinjected plastic garment hanger**
Mehrkomponenten-spritzgegossener Kleiderbügel aus Kunststoff
Cintre co-injecté et matière plastique

(30) Priority: 29.05.1991 US 706779; 18.05.1992 US 885291
(43) Date of publication of application: 02.12.1992
(60) Divisional application: 97112079.5
(73) Proprietor: SPOTLESS PLASTICS PTY. LTD., Moorabbin, VIC 3189 (AU)
(72) Inventor: Harmer, Ronald G., Centereach, New York 11720 (US); Olk, Olaf F., Hauppauge, New York 11788 (US); Gouldson, Stanley, Northport, New York 11768 (US)
(74) Representative: Grünecker, Kinkeldey, Stockmair & Schwanhäusser Anwaltssozietät

(56) References cited:
- EP-A- 0 172 149
- EP-A- 0 412 670
- DE-A- 1 929 875
- FR-A- 2 473 949
- FR-A- 2 601 618
- US-A- 4 886 195
- PATENT ABSTRACTS OF JAPAN vol. 7, no. 31 (M-192)(1176) 8 February 1983 & JP-A-57 187 228 (MATSUSHITA DENKI SANGYO)

## Description

The present invention relates to a co-injected plastic garment hanger of the type as described in the preamble of claim 1.

A plastic garment hanger of this type is known from EP-A-412 670. The known plastic hanger is injection formed, and has clamping means for clamping the garments. Each clamping means include a jaw which is provided with a gripping pad. The gripping pad is co-injection formed together with the remaining plastic garment hanger.

In industry, particularly such as the garment manufacturing industry, plastic hangers garment are widely employed for the purpose of shipping and displaying garments, such hangers frequently being of the inexpensive ship-on type whereby the garment is shipped from the manufacturer or wholesaler to the retailer while suspended from the hanger. Generally, such garment hangers are inexpensive single-piece or unitary molded plastic structures which are adapted to be either discarded at the time of sale, returned to the garment manufacturer or provided to a customer free of charge in conjunction with the purchase of the garment suspended therefrom.

Garment hangers of that type may either be simply constructed as molded plastic structures incorporating a unitary or metal central hook portion adapted to be suspended from a suitable support, such as a garment rack or the like, and with a hanger body portion having arms extending in opposite directions from the base of the hook portion so as to facilitate a garment to be suspended therefrom. When needed for a specific use, the opposite or distal ends of the body portion or arms may be formed with suitable grip slots or clip members to enable the attachment of various kinds of garments thereto, such as underwear, slips, brassieres, multiple garments, and the like.

The prior art (EP-A-172 149) includes a number of garment hangers that are molded so as to receive various indicia or logos, which may be representative of the garment manufacturer or designer, or possibly the retail establishment, to provide a form of advertisement and to also identify the origin of the garment being suspended therefrom. An embossed logo may also be imprinted therein so as to provide various color contrasts provided through molded raised or recessed surfaces representative of a logo, advertisement, or the like as mentioned hereinbefore.

The prior art (FR-A-2 473 949) also includes garment hangers for coats, blazers and other heavier garments which are fitted with pads or rubber strips, along the shoulder portion, or non-slip adhesive coatings on the pants bar to help retain the garment on the hanger.

US-A-4 886 195 discloses a plastic garment hanger of a basically unitary construction wherein garment size identification structure is molded into the hanger, such as in the shape of a flat surface molded into the hook portion of the hanger. Although this provides for a suitable provision of indicia, such as garment size identification or of a logo and the like, the hanger would not be readily employable for garments produced by either different manufacturers or for garments of different sizes. Consequently, the garment hanger is limited to its use for a specific application and/or garment type or size.

US-A-4 006 547 discloses a garment hanger in which indicia means are attachable to the hanger body in the form of tabs or the like which can be removed from the hanger at the point of sale, or replaced by other indicia-incorporating structure when it is required to employ the garment hanger for different garment types.

Similarly, US-A-4 115 940 discloses a molded plastic garment hanger in which clips or tabs bearing specified indicia may be detachably fastened to the hanger structure.

US-A-4 655 867 discloses a garment hanger having a non-slip strip of resilient material adhesively secured to the shoulder portions of the hanger.

US-A-4 606 482 discloses a rod-type garment hanger having a pre-formed sleeve of non-slip protective material which is slipped over the rod portions of the hanger to assist in retaining garments on the hanger.

US-A-4 058 241 discloses a tightly braided cover which is plaited around the periphery of a garment hanger to provide protection for the garment and to prevent garment slippage from the hanger.

The prior art also discloses numerous kinds of apparatus and methods for molding two-component plastic materials; in essence, by means of a two-step or co-injection process. However, these have not been specifically applied to the production of a two-component or composite plastic garment hanger of the types considered herein.

In essence, US-A-4 416 602 discloses an injection molding apparatus for manufacturing articles from different types of plastic materials, in which a first plastic material is injected into a mold to form a frame member or the like, and thereafter subsequent to cooling and solidifying of the molten plastic material, a second plastic material is injected into the cavity of the mold so as to form an insert within an aperture of the frame member provided by the first plastic material, thereby fuzing the plastic materials and forming a mechanical bond therebetween.

Similar types of molding apparatus and methods of that kind are disclosed in various patent publications, representative of which are US-A-4 711 621 disclosing a mold for producing composite bodies from different plastic materials; US-A-4 335 068 and US-A-3 577 596.

Accordingly, in order to improve upon the plastic hangers which are currently available in the industry, and which incorporate integral structure bearing indicia or logos for the purpose of identifying manufacturers, designers, retailers or the like by having such information molded or embossed into the primary hanger construction, according to the invention a co-injected plastic garment hanger as defined in claim 1 is provided. Particular embodiments of the invention are disclosed in the dependent claims.

Various desirable attributes for hangers may be created in a coinjected hanger which are not available to a hanger molded from a single plastic. These attributes may include color ornamentation, size index markings, logos or trademarks associated with the garment suspended from the garment.

The composite garment hangers which are thus formed from two separate materials, may be constituted from two plastic materials of the same color and/or type of plastic, or from different kinds of plastic materials and which, if desired, may be imparted different colors to provide a decorative effect. The second plastic material for the insert which is molded into the frame-like enclosure and which has the logo impressed or molded therein, is generally produced in the same mold for producing the basic hanger structure through a co-injection method, subsequently to the initial molding and cooling of the basic hanger structure so as to cause the insert to fuse and bond with the contacting surfaces within the enclosure molded into the plastic material for the hanger. This bond may be a mechanical bond, a plastic molded bond, or a fusion bond, depending on the plastics selected, and the relative injection, set and cool cycles of the coinjection machine. This imparts a versatility to the construction and utilization of such garment hangers inasmuch as a single mold with a movable core can be employed for forming the entire composite plastic garment hanger construction, and the mold may be modified with regard to the formation of the insert portion adapted to be received within the enclosure, so as to enable the hanger to be individualized concerning the incorporation of indicia representative manufacturers, designers and/or retail establishments at a minimum cost and effort.

A co-injection plastic molding method is used whereby plastic materials of different types and/or colors may be readily employed so as to have a first plastic material of a specified type and color form the basic hanger structure, cooled to some extent within the mold so as to at least partially solidify, and thereafter a mold core is movable into a position in communication with an inlet for a further or second plastic material which may be either of the same color and/or type as the first plastic material or, possibly of a different color and/or material type, and in which the second plastic material forms the insert which is fused and bonded with the plastic material of the basic hanger structure so as to provide for either a permanent or detachable connection therebetween. However, it may also be readily appreciated that, upon the manufacture of larger quantities of such garment hangers, in the event that appreciable numbers of such hangers bearing a specific indicia or logo cannot be employed, it may be possible to simply punch or knock out the insert by applying lateral mechanical pressure thereto, and thus facilitate removal of the undesired logo-bearing insert from the hanger without inherently damaging the basic hanger construction itself, thereby enabling such garment hangers to be generically employed with other types and makes of garments.

A further development of the present invention also provides a coinjected garment hanger having a non-slip plastic material that is molded and bonded to the shoulder portions of the hanger to prevent slippage of the garment from the hanger.

Accordingly, it is an object of the present invention to provide a molded plastic garment hanger which incorporates an insert consisting of a second plastic material adapted to have indicia, logo or non-slip means molded therein, and which insert may be fused to the hanger structure so as to form a molded plastic or mechanical bond with the first plastic material constituting the basic garment hanger.

Another object of the present invention is to provide a two-component plastic garment hanger adapted to be molded through a single co-injection molding process, whereby an insert which may be of a similar color and/or plastic material,as the basic hanger construction, or alternatively, of a different coloring and/or type of plastic material, is fused within a mold to the material of the basic hanger construction so as to form a mechanical bond therebetween.

Another object of the present invention is to provide a mold for the co-injection of at least two plastic materials to form a composite molded plastic garment hanger structure.

A more specific object resides in the provision of a plastic mold of the type described herein, in which a second plastic material is molded into a frame-like enclosure formed from the first plastic material producing the basic hanger construction so as to be fused thereto and forming a mechanical bond therewith.

The foregoing and other objects of the invention may now be more readily ascertained from the following detailed description of preferred embodiments thereof, taken in conjunction with the accompanying drawings; in which:
Figure 1 illustrates a fragmentary side view of a molded plastic garment hanger incorporating an insert pursuant to the inventive concept;
Figure 2 illustrates an embodiment in a view similar to Fig. 1, showing a modification thereof;
Figure 3 illustrates an embodiment in a view similar to Fig. 1, showing a further modification thereof;
Figure 4 illustrates a fragmentary schematic plan view of a mold showing the cavity for forming the plastic garment hanger pursuant to the invention;
Figure 5 illustrates a sectional view taken along line 5 - 5 in Fig. 4;
Figure 6 illustrates a view similar to Fig. 5 showing the mold in a further operative position;
Figure 7 illustrates a view similar to Fig. 5 showing the mold in the final operative position for forming the composite molded plastic garment hanger;
Figure 8 illustrates a side view of an integral molded plastic garment hanger incorporating, for the purposes of illustration, two types of non-slip plastic inserts, with one type on each shoulder of the hanger;
Figure 9 is a cross-section of the hanger illustrated in Fig. 8 taken along section line 9 - 9;
Figure 10 is a cross-section of a trouser bar;
Figure 11 is a cross-section of a portion of a garment hanger that would be formed by the mold illustrated in Fig. 14, taken along section line 11 - 11 in Fig. 14;
Figure 12 is a cross-section of an alternative embodiment of the portion of a garment hanger that would be formed by an alternate mold construction, if taken along section line 11 - 11 in Figure 14;
Figure 13 is a cross-section of an alternative embodiment of the portion of a garment hanger that would be formed by still another alternate mold construction if taken along section line 11 - 11 in Figure 14; and
Figure 14 is a cross-section of a mold cavity used to form the hanger illustrated in Figure 8.

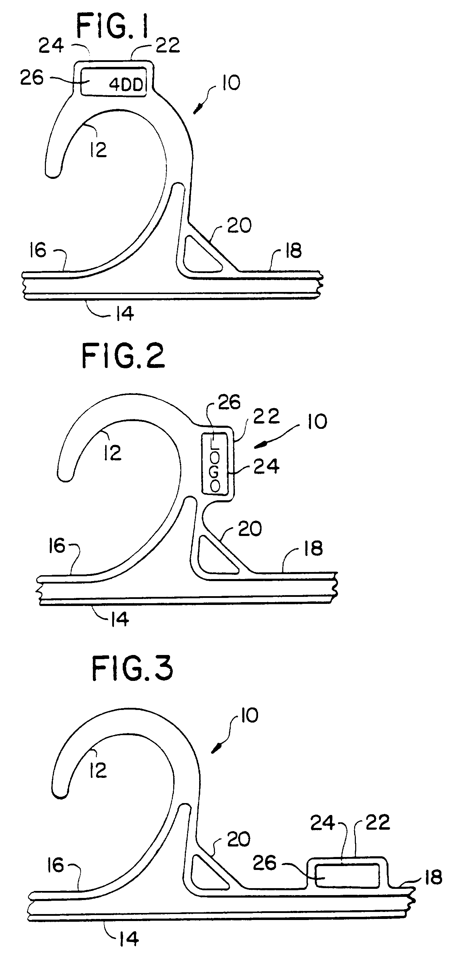

Referring now in detail to the drawings, and particularly the hanger construction as shown in Fig. 1, there is illustrated a partial or fragmentary side view of a molded plastic garment hanger 10 having a central hook portion 12 which is integrally molded with hanger body 14, the latter of which includes a pair of coplanar oppositely directed arms 16 and 18 for suspending one or more garments, as is well known in industry. The distal ends of each of the arms 16 and 18 may, if desired, be equipped with suitable garment gripping or clip structure, for example, as disclosed in US-A-4 623 079, or alternatively, may be of a simple rounded end configuration to merely permit hanging suspension of a garment rather than fastening the garment to the hanger. In order to provide a reinforcement for the hook portion 12, a suitable gusset or flange 20 may be molded into the hanger proximate the juncture between base of the hook portion 12 and the arm 18 of the hanger body 14. This will impart an enhanced degree of strength against bending of the hook portion in the plane of the body 14 under the weight of a supported garment.

Pursuant to the inventive structure of the hanger, as shown in the embodiment of Fig. 1, the upper end of the hook portion 12 has integrally molded thereto a suitable enclosure or frame portion 22 providing an enclosed aperture 24, in this instance, of a generally rectangular configuration. Positioned within the aperture 24 of enclosure 22 is an insert 26 of a plastic material which may either be of the same color and/or type of plastic as that of the basic hanger construction or, alternatively, may be of a different plastic material and/or color to provide a composite hanger structure of a specific decorative nature. The plastic insert 26 is essentially molded into the enclosure 22 so as to fuse with the material of the contacting edge surface of the latter and to thereby form a plastic molded or mechanical bond between the insert 26 and the basic hanger structure 10 as will be hereinafter described in greater detail. Suitable logos and other kinds of indicia may be molded or sized into the insert 26, such as for identifying the garment manufacturer or designer, or the retailer, or may include any other suitable advertising or identifying legends in conformance with the requirements of the retailer or manufacturer of the garments.

The modified embodiments of the hanger as shown in Figs. 2 and 3, in which identical or similar elements are identified by the same reference numerals as those in Fig. 1, primarily differ from the former in the location of the enclosure 22 for the insert which is molded into the basic garment hanger construction, and whereby the insert 26 is shown at different positions relative to the hanger hook portion 12 and hanger body 14.

Thus, in Fig. 2, rather than being located at the upper end of the hook portion 12, the enclosure 22, and resultingly insert 26, are formed towards one side of the hook portion and extend coplanarly intermediate the upper end and the juncture of the base of the hook portion 12 with the hanger body 14.

Similarly, in the embodiment of Fig. 3, rather then being formed on the hook portion 12, the enclosure 22 may be molded onto the hanger body 14, in this instance, onto the arm 18 so as to extend upwardly therefrom in a type of tab structure, and with the insert 26 being fused and mechanically bonded therein as in the previous embodiments.

It is also possible to contemplate providing apertures for receiving inserts 26 in the body of the hanger portion 14 itself; for instance, such as in the region within the base of the hook portion, or at any other suitable location as desired by the needs of a customer for the garment hanger.

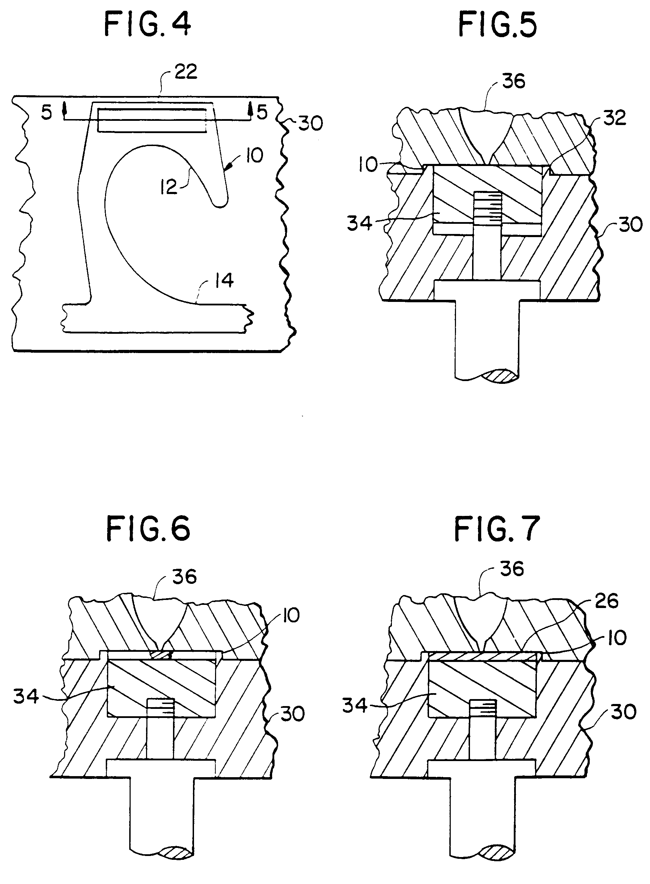

The entire composite hanger structure may be molded in a co-injection plastic mold 30, as shown diagrammatically in Figs. 4 through 7 of the drawings.

Hereby, the injection mold 30 includes a mold cavity 32 which is equipped with a movable core 34 to enable a first plastic material in a molten state to be injected therein so as to form the basic hanger construction 10 incorporating the enclosure or frame 22 for an insert 26 which is to be subsequently located therein. After this molding procedure is completed with regard to the injection of the first plastic material into the mold cavity 32 for the basic hanger construction 10, the core 34 is displaced, as shown in Fig. 6, so as to be retracted to close off the infeed for the first plastic material, and a second plastic material is commenced being injected into the mold cavity from a separate injection inlet 36. The second plastic material, as shown in Fig. 7 fills the aperture or pocket formed within the frame 22 when the core is fully retracted and the mold is allowed to cool to produce the insert 26. Hereby, the second mold cavity formed between the core 34 and the hanger 10 may also be provided with a suitable configuration to permit the concurrent molding of various logo or indicia into or onto the insert 26. The face of the core 34, and the opposing side of the mold cavity, formed by mold 30 may be embossed with complementary indicia, such as size indicia, which may be viewed from either side of the completed hanger. Upon opening of the mold subsequent to cooling, the completed composite garment hanger structure is ejected, the mold then closed and readied for the molding of another garment hanger pursuant to the invention.

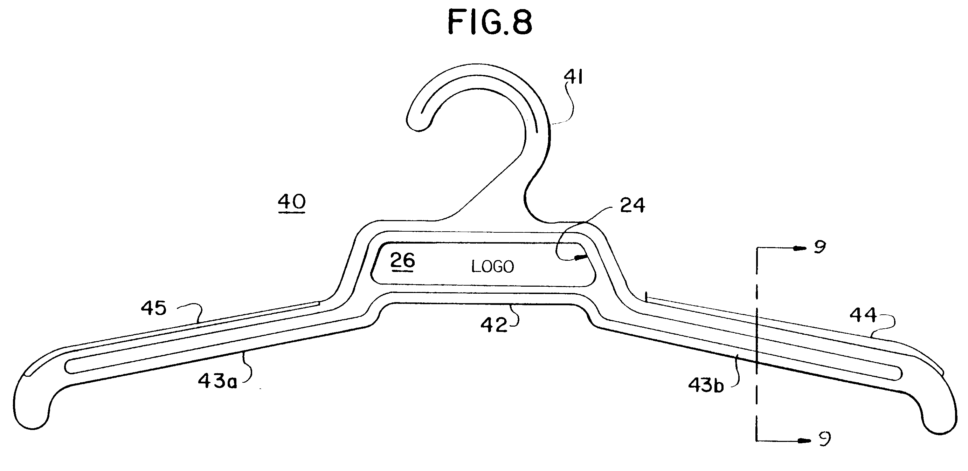

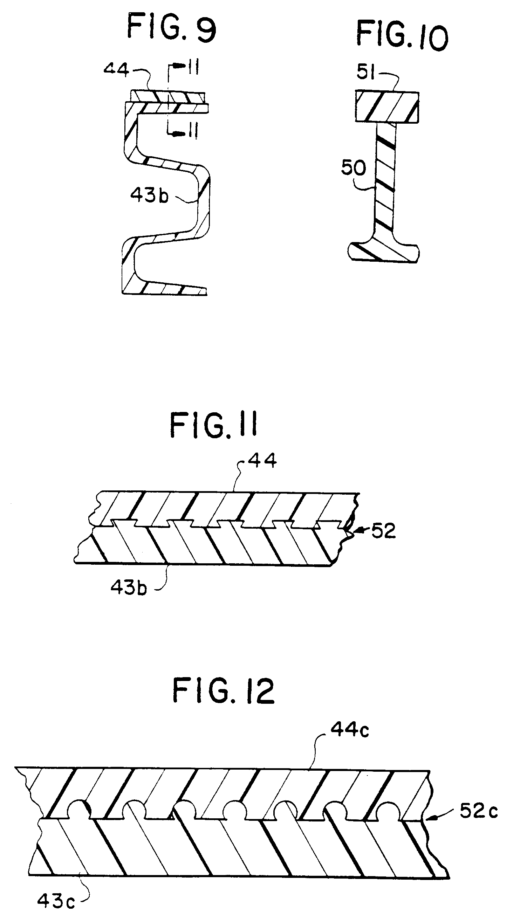

Figure 8 illustrates a side view of an integral molded plastic garment hanger 40 incorporating, for the purposes of illustration, two types of non-slip plastic inserts 44, 45, with one type of each insert on each shoulder of the hanger. The hanger illustrated in Figure 8 includes a centrally located hook portion 41 and a molded body member 42 connected thereto which extends outwardly and downwardly from the lower end of the hook member. This hanger may also form an aperture 24 within body member 42 for receipt of an insert 26 in a manner similar to that illustrated for Figures 1-4. The molded body member has M section arms 43a, 43b which are illustrated in cross-section in Figure 10 which provide structural strength for the hanger and support for the garment. For the purposes of illustration, two types of inserts 44, 45 are illustrated, although it is understood that in actual practice, each of the arms 43a, 43b would normally be equipped with the same type of insert. A cross-section of the arm 43b taken along section line 9 - 9 is illustrated in Figure 9 which illustrates, in cross-section, the cross-section of the non-slip insert 44 bonded to the shoulder portion of hanger arm 43b. As illustrated in Figure 8, the insert 44 sets on top of the shoulder to provide a non-slip gripping surface for hanger 40. A cross-section of arm 43a would be similar to the cross-section illustrated in Figure 9, wherein the non-slip portion is completely embedded within the outwardly extending arm. In addition, the hanger can include a well-known trouser bar 50. Trouser bar 50 has fused thereto a non-slip insert 51 arranged across the entire upper portion of the pants support bar 50. A cross-section of the trouser bar 50 is illustrated in Figure 10.

The bond between the plastic insert 26 and the enclosure 22 of Figures 1-4 and the non-slip inserts 44, 45 and 51 and the hangers illustrated in Figures 8 to 10 may be a mechanical bond, a molded plastic bond, a fused bond or a combination thereof as desired. The factors which determine the type of bond include the chemical compatibility of the plastics involved, the melting and fusing temperatures of the respective plastics involved, the temperatures at which the plastic is injected into the respective mold cavities, the temperature at which the cavity is maintained, and the respective dwell time between the injection of the first plastic, and the removal of the mold insert and the injection of the second plastic.

By adjusting the parameters of the process, one may achieve a mechanical bond, a plastic molded bond, or a wholly fused bond wherein the surface layers of the plastics have intermixed with each other.

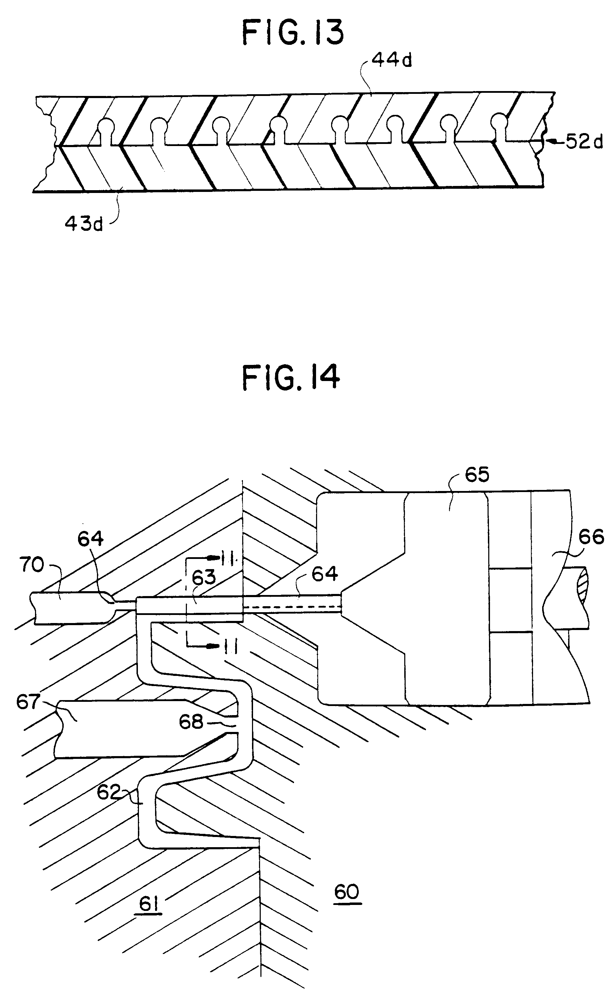

Figure 11 is an enlarged illustration of a portion of the hangers illustrated in Figures 8-10 as formed in the mold cavity illustrated in Figure 14. This cross-section is a portion of the cross-section taken at 90° to the cross-section illustrated in Figures 9 and 14 along section line 11 - 11. As illustrated in Figure 11, the non-slip plastic insert 44 is mechanically bonded to the support arm 43b by means of a series of interlocking dove tail joints generally indicated at 52. An alternative embodiment for the means by which the non-slip plastic insert 44c is mechanically bonded to arm 43c is illustrated in Figure 12 which illustrates a mechanical bond by means of a series of interlocking buttonhole joints, generally indicated at 52c in Figure 12. Still another embodiment for the means by which the non-slip plastic insert 44d is mechanically bonded to arm 43d is illustrated in Figure 13 which illustrates a mechanical bond by means of a series of interlocking key hole joints, generally indicated at 52d in Figure 13. Any one of a variety of locking methods including those illustrated in Figures 11 to 13 can be used depending upon the preference of the manufacturer. Alternately, the configurations may be reversed with the key portion that is illustrated as integrally molded on arm 43b, c or d, molded on non-slip insert 44, and the complementary portion that is illustrated as integrally molded on non-slip plastic insert 44b, c or d is molded on arm 43b. The illustrations of Figures 11 to 13 are intended to be illustrative only of a wide variety of mechanical interlocks suitable for use as a mechanical bond.

The mold for producing the construction is illustrated in Figure 14 wherein injection mold 60, 61 define therebetween a mold cavity 62 with a sub-cavity 63 that is, during a first mold cycle, filled with a reciprocating core member 64. Core member 64 is mounted on reciprocating piston 65 for movement in and out of mold cavity 63 by virtue of a hydraulic cylinder 66.

A first plastic material in a molten state is injected through feeder 67 and orifice 68 to fill the mold cavity 62 during the first mold cycle. During this filling operation, mold core 64 is within and completely fills the mold cavity 63 and closes orifice 69. After the plastic from the primary source feeder 67 has completely filled the mold cavity 62, a second mold cycle is begun in which the mold core 64 is withdrawn from cavity 63 which allows a second insert plastic material to be injected via conduit 70 through orifice 69 and into mold cavity 63. The residence time of core 64 within cavity 63 is dependent upon the type of plastics being used, the operating temperatures, the cycle time, and the type of bond desired between the insert and the plastic hanger body. It should be noted that the mold core 64 has a dove tail cross-section essentially identical to the cross section illustrated in Figure 11 for insert 44. When mold core 64 is filling cavity 63 it forms the dove tail portion of the main hanger body 43b as illustrated in Figure 11 from the primary material. When the core 64 is withdrawn, the secondary material fills each of the dove tail cavities formed in the base member thereby completing the cross-section illustrated in Figure 11. However, it should be noted that the present invention is not limited to mechanical bonding by means of dove tail joints. As illustrated in Figures 12 and 13 the mold core 64 could also have a buttonhole joint or keyhole joint cross-section as means of mechanically bonding the arm 43b and the non-slip plastic insert 44. After the insert cavity 63 has been filled, mold 60, 61 is cooled, mold members 60, 61 are separated, and the newly formed hanger is ejected from mold cavity 62 by means of ejector pins (not shown).

From the foregoing illustrations it is readily apparent that the present invention is directed to an extremely simple composite garment hanger construction, preferably produced in a coinjection mold through a simple two step process which requires a minimum amount of effort and expenditure, while being versatile in its applications due to the specific structural aspects of the members. No costly hand labor is required to attach sizing index caps, to stamp logos, or to affix the non-slip strips to the shoulders of the hangers. All is accomplished in a single molding operation.

The plastic materials which can be employed with the molding operation in order to produce the inventive composite molded plastic hanger may include, but are not limited to plastic materials such as polystyrene, SAN, ABS, PPO, nylon, polypropylene, polyethylene, PET, polycarbonates, acrylics and PVC among others, each being provided with specific coloration in conformance with the specific demands of the customer. When it is desired to mold composite hangers with the non-slip inserts, polypropylene and polyethylene primary materials may be combined with ethylene vinyl acetate, low density polyethylene, or thermoplastic elastomers for the non-slip layer. Alternately, if polystyrene, ABS or SAN primary materials are desired, they may be combined with ethylene vinyl acetate, PVC or thermoplastic elastomers. Other materials suitable for the primary body construction such as PVC, PC, PMMA or a mixture of a polystyrene with one of the foregoing primary materials may be used with EVA, PVC or thermoplastic elastomers and the non-slip insert material.

More particularly, when a chemical bond is desired, it is preferable to use styrene main as the primary material with styrene or polypropylene main as the primary material with EVA/PP mix. When a chemical and mechanical bond is desired, it is preferable to use styrene main as the primary material with styrene rubber. When a mechanical bond is desired, it is preferable to use polypropylene main as the primary material with polyethylene.

While there have been shown and described what are considered to he the preferred embodiments of the invention, it will, of course, be understood that various modifications and changes in form or detail can readily be made without departing from the invention as hereinafter claimed.

## Claims

1. A co-injected plastic garment hanger (10,40) having a hook member (12,41) for suspending said garment hanger (10,40) from a support, said hanger having a molded plastic body member (14,42) attached to said hook (12,41) to support a garment therefrom, and at least one co-injected member (26) molded into said garment hanger,
**characterized in that**
at least one enclosure (22) is provided having a through-aperture (24) molded therein of specified configuration and size, and said at least one co-injected member includes an insert (26) constituted from a second plastic material of a configuration and size commensurate with the aperture (24) of said enclosure (22) so as to form a bond with the plastic material of said garment hanger.

2. The co-injected plastic garment hanger as claimed in claim 1, wherein said insert (26) is constituted from a plastic material which is dissimilar from the plastic material of said hook member (12,41) and hanger body (14,42).

3. The co-injected plastic garment hanger as claimed in claim 1, wherein said insert (26) and said hook member (12,41) and hanger body (14,42) consist of similar types of plastic materials.

4. The co-injected plastic garment hanger as claimed in any one of claims 1 to 3, wherein said insert (26) has a coloring which differs from the coloring of said hook member (12,41) and hanger body (14,42).

5. The co-injected plastic garment hanger as claimed in any one of claims 1 to 3, wherein said insert (26) has indicia imprinted, embossed or molded thereon.

6. The co-injected plastic garment hanger as claimed in any one of claims 1 to 5, wherein said at least one enclosure (22) for said insert (26) is coplanarly molded at an upper end of said hook member (12) distant from a base portion (20) connecting said hook member (12) with said hanger body (14), or on an outer side edge of said hook member (12) intermediate an upper end and base of said hook member (12), or on the body (14) of said garment hanger.

7. The co-injected plastic garment hanger as claimed in any one of claims 1 to 6, wherein said at least one enclosure (22) has a generally rectangular or triangular configuration.

8. The co-injected plastic garment hanger as claimed in any one of claims 1 to 7, wherein said bond is a mechanical bond, a plastic molded bond, a co-injected molded bond, or a fused bond.

9. The co-injected plastic garment hanger as claimed in any one of claims 1 to 8, wherein said bond is a mechanical bond (52,52c,52d) formed between said insert (26) and said body member (14,42) by said co-injection.

10. The co-injected plastic garment hanger as claimed in any one of claims 1 to 9 further including at least one co-injected non-slip strip (44,45) molded into at least one surface of said molded body member (14,42) to assist in retaining a garment thereon.

11. The co-injected plastic garment hanger as claimed in any one of claims 1 to 7 wherein said insert (26) is removably bonded to the plastic material of said garment hanger.

## Patentansprüche

1. Mehrkomponenten-spritzgegossener Kunststoff-Kleiderbügel (10, 40) mit einem Hakenteil (12, 41) zum Abhängen des Kleiderbügels (10, 40) an einem Träger, wobei der Kleiderbügel ein gegossenes Kunststoff-Körperteil (14, 42), das am Haken (12, 41) befestigt ist, um ein Kleidungsstück daran aufzuhängen, und mindestens ein gemeinsam spritzgegossenes Teil (26) aufweist, das in den Kleiderbügel eingegossen ist, **dadurch gekennzeichnet**, daß mindestens eine Aufnahme (22) vorgesehen ist, die eine darin eingegossene Durchgangsöffnung (24) einer speziellen Ausbildung und Größe aufweist, und daß das mindestens eine gemeinsam spritzgegossene Teil einen Einsatz (26) enthält, der aus einem zweiten Kunststoffmaterial in einer Ausbildung und einer Größe gefertigt ist, die der Öffnung (24) der Aufnahme (22) entspricht, so daß eine Verbindung mit dem Kunststoffmaterial des Kleiderbügels ausgebildet ist.

2. Mehrkomponenten-spritzgegossener Kunststoff-Kleiderbügel nach Anspruch 1, wobei der Einsatz (26) aus einem Kunststoffmaterial gefertigt ist, das sich vom Kunststoffmaterial des Hakenteils (12, 41) und des Bügelkörpers (14, 42) unterscheidet.

3. Mehrkomponenten-spritzgegossener Kunststoff-Kleiderbügel nach Anspruch 1, wobei der Einsatz (26) und das Hakenteil (12, 41) und der Bügelkörper (14, 42) aus ähnlichen Arten von Kunststoffmaterialien bestehen.

4. Mehrkomponenten-spritrgegossener Kunststoff-Kleiderbügel nach einem der Ansprüche 1 bis 3, wobei der Einsatz (26) eine Farbgebung aufweist, die sich von der Farbgebung des Hakenteils (12, 41) und des Bügelkörpers (14, 42) unterscheidet.

5. Mehrkomponenten-spritzgegossener Kunststoff-Kleiderbügel nach einem der Ansprüche 1 bis 3, wobei der Einsatz (26) aufgedruckte, eingedrückte oder eingegossene Zeichen aufweist.

6. Mehrkomponenten-spritzgegossener Kunststoff-Kleiderbügel nach einem der Ansprüche 1 bis 5, wobei mindestens eine Aufnahme (22) für den Einsatz (26) coplanar gegossen ist an einem oberen Ende des Hakens (12) im Abstand von einem Basisbereich (20), der das Hakenteil (12) mit dem Bügelkörper (14) verbindet, oder an einer äußeren Seitenkante des Hakenteils (12) zwischen einem oberen Ende und der Basis des Hakenteils (12), oder am Körper (14) des Kleiderbügels.

7. Mehrkomponenten-spritzgegossener Kunststoff-Kleiderbügel nach einem der Ansprüche 1 bis 6, wobei die mindestens eine Aufnahme (22) eine im wesentlichen rechtwinklige oder dreieckige Ausbildung zeigt.

8. Mehrkomponenten-spritzgegossener Kunststoff-Kleiderbügel nach einem der Ansprüche 1 bis 7, wobei die Verbindung eine mechanische Verbindung, eine kunststoffgegossene Verbindung, eine gemeinsam spritzgegossene Verbindung oder eine geschmolzene Verbindung ist.

9. Mehrkomponenten-spritzgegossener Kunststoff-Kleiderbügel nach einem der Ansprüche 1 bis 8, wobei die Verbindung eine mechanische Verbindung (52, 52c, 52d) ist, die durch das gemeinsame Spritzgießen zwischen dem Einsatz (26) und dem Körperteil (14, 42) ausgebildet ist.

10. Mehrkomponenten-spritzgegossener Kunststoff-Kleiderbügel nach einem der Ansprüche 1 bis 9, ferner enthaltend mindestens einen gemeinsam spritzgegossenen Gleitschutzstreifen (44, 45), der in mindestens eine Oberflache des gegossenen Körperteils (14, 42) eingegossen ist, um zum Festhalten des Kleidungsstückes beizutragen.

11. Mehrkomponenten-spritzgegossener Kunststoff-Kleiderbügel nach einem der Ansprüche 1 bis 7, wobei der Einsatz (26) am Kunststoffmaterial des Kleiderbügels entfernbar befestigt ist.

## Revendications

1. Cintre pour vêtement en matières plastiques co-injectées (10, 40) ayant un élément formant crochet (12, 41) pour suspendre ledit cintre pour vêtement (10, 40) à un support, ledit cintre ayant un élément formant corps en matière plastique moulée (14, 42) fixé audit crochet (12, 41) prévu pour supporter un vêtement à partir de celui-ci, et au moins un élément co-injecté (26) moulé à l'intérieur dudit cintre pour vêtement,
caractérisé en ce que
au moins une enclave (22) est prévue ayant en son sein une ouverture traversante (24) moulée, de conformation et de taille spécifiées, et en ce que ledit au moins un élément co-injecté comprend un insert (26) constitué d'une seconde matière plastique de conformation et de taille proportionnées à l'ouverture (24) de ladite enclave (22) de manière à former une liaison avec la matière plastique dudit cintre pour vêtement.

2. Cintre pour vêtement en matières plastiques co-injectées selon la revendication 1, dans lequel ledit insert (26) est constitué d'une matière plastique qui est différente de la matière plastique dudit élément formant crochet (12, 41) et dudit corps de cintre (14, 42).

3. Cintre pour vêtement en matières plastiques co-injectées selon la revendication 1, dans lequel ledit insert (26) et ledit élément formant crochet (12, 41) ainsi que ledit corps de cintre (14, 42) sont constitués de types de matières plastiques similaires.

4. Cintre pour vêtement en matières plastiques co-injectées selon l'une quelconque des revendications 1 à 3, dans lequel ledit insert (26) a une coloration qui diffère de la coloration dudit élément formant crochet (12, 41) et dudit corps de cintre (14, 42).

5. Cintre pour vêtement en matières plastiques co-injectées selon l'une quelconque des revendications 1 à 3, dans lequel ledit insert (26) a des indices imprimés, gaufrés ou moulés sur lui.

6. Cintre pour vêtement en matières plastiques co-injectées selon l'une quelconque des revendications 1 à 5, dans lequel ladite au moins une enclave (22) pour ledit insert (26) est moulée de façon coplanaire à une extrémité supérieure dudit élément formant crochet (12) distante d'une partie de base (20) qui relie ledit élément formant crochet (12) audit corps de cintre (14), ou sur un bord latéral extérieur dudit élément formant crochet (12) à une position intermédiaire entre une extrémité supérieure et la base dudit élément formant crochet (12), ou sur le corps (14) dudit cintre pour vêtement.

7. Cintre pour vêtement en matières plastiques co-injectées selon l'une quelconque des revendications 1 à 6, dans lequel ladite au moins une enclave (22) a une conformation globalement rectangulaire ou triangulaire.

8. Cintre pour vêtement en matières plastiques co-injectées selon l'une quelconque des revendications 1 à 7, dans lequel ladite liaison est une liaison mécanique, une liaison par moulage de matière plastique, une liaison par moulage co-injectée, ou une liaison formée par fusion.

9. Cintre pour vêtement en matières plastiques co-injectées selon l'une quelconque des revendications 1 à 8, dans lequel ladite liaison est une liaison mécanique (52, 52c, 52d) formée entre ledit insert (26) et ledit élément formant corps (14, 42) par ladite co-injection.

10. Cintre pour vêtement en matières plastiques co-injectées selon l'une quelconque des revendications 1 à 9 comprenant en outre au moins une bande antidérapante co-injectée (44, 45) moulée dans au moins une surface dudit élément formant corps moulé (14, 42) pour aider à retenir un vêtement sur lui.

11. Cintre pour vêtement en matières plastiques co-injectées selon l'une quelconque des revendications 1 à 7, dans lequel ledit insert (26) est lié de façon amovible à la matière plastique dudit cintre pour vêtement.
